# FASCICULE DE BREVET EUROPEEN

(11) **EP 3 728 040 B1**
(45) Date de publication et mention de la délivrance du brevet: **06.09.2023**
(21) Numéro de dépôt: 18842439.4
(22) Date de dépôt: 20.12.2018
(51) Int. Cl.: B64D 29/00, F02K 1/72

(54) **NACELLE DE MOTEUR D'AÉRONEF**
FLUGZEUGTRIEBWERKSGONDEL
AIRCRAFT ENGINE NACELLE

(30) Priorité: 21.12.2017 FR 1762849
(43) Date de publication de la demande: 28.10.2020
(73) Titulaire: Safran Nacelles, 76700 Gonfreville-l'Orcher (FR)
(72) Inventeur: GRALL, Loïc, 76700 Gonfreville-l'Orcher (FR); SERISET, Mélody, 76700 Gonfreville-l'Orcher (FR); HEAU, Alexis, 76700 Gonfreville-l'Orcher (FR); BREBION, Benjamin, 76700 Gonfreville-l'Orcher (FR); KERBLER, Olivier, 76700 Gonfreville-l'Orcher (FR)
(74) Mandataire: Germain Maureau
(86) Numéro de dépôt international: PCT/FR2018/053460
(87) Numéro de publication internationale: WO 2019/122752

(56) Documents cités:
- WO-A1-2014/091140
- WO-A1-2016/116709
- WO-A1-2018/100288
- FR-A1- 2 980 173
- US-A1- 2011 318 173
- US-B1- 6 167 694

## Description

La présente invention concerne une nacelle de moteur d'aéronef comportant un inverseur de poussée à grilles coulissantes.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'inverseur de poussée est un dispositif qui permet de diriger le flux d'air généré par le turboréacteur vers l'avant, permettant à la fois de raccourcir la distance d'atterrissage et également de limiter la sollicitation des freins au niveau des atterrisseurs.

Les technologies les plus modernes utilisent des turboréacteurs double flux ; dans ces turboréacteurs, on vient générer par l'intermédiaire des pales de la soufflante, à la fois un flux d'air chaud dit flux primaire, et un flux d'air froid dit flux secondaire.

Ce second flux dit d'air froid circule à l'extérieur du turboréacteur à travers un passage annulaire également appelé veine, cette veine étant formée entre un carénage du turboréacteur et la paroi interne de la nacelle.

Dans ce type de moteur, l'inverseur de poussée vient obstruer totalement ou partiellement la veine de flux d'air froid, afin de rediriger ce flux vers l'avant de la nacelle.

Il existe plusieurs technologies différentes pour réaliser ces inverseurs de poussée. Par exemple il existe des inverseurs de poussée à grille comportant un capot externe coulissant afin de découvrir des grilles d'inversion de poussée, tels que décrits dans les demandes de brevet WO 2016/116709 et WO 2018/100288.

Une technologie particulièrement intéressante parce qu'elle réduit la longueur de la nacelle et par conséquent limite à la fois la masse de cette dernière et sa traînée, consiste à concevoir des inverseurs de poussée à grilles mobiles dans lesquelles les grilles sont logées entre les carters et le capot de la soufflante, lors d'un fonctionnement en jet direct de la nacelle.

Dans ce type d'inverseur de poussée, l'inversion est réalisée en translatant un capot mobile externe avec les grilles qui sortent ainsi de leur logement et permettent la redirection du flux d'air vers l'avant.

La présente invention se situe dans cette catégorie d'inverseur de poussée à grilles mobiles.

Sur de tels inverseurs de poussée à grilles coulissantes, le capot extérieur de la soufflante, c'est-à-dire de la section médiane entourant la soufflante, est situé radialement à l'extérieur du carter de cette section médiane, le capot de souffante étant en interface avec le carter de soufflante par l'intermédiaire d'un support avant en zone avant.

Une extrémité aval du capot de soufflante est quant à elle en interface avec une extrémité amont du capot mobile de l'inverseur de poussée à grilles coulissantes.

Lors du déploiement de l'inverseur de poussée, le bord arrière du capot de soufflante se retrouve libre (en porte à faux) au-dessus des grilles. Lors de la phase de fermeture de l'inverseur, le bord aval du capot de soufflante peut alors se déplacer sous les effets d'inerties ou de chargement aérodynamiques (grilles, Cp externe, vent latéral) et risque de rentrer en contact soit avec les grilles, soit avec le support du capot mobile.

Sur les inverseurs à grilles coulissantes actuels, le capot de soufflante est fixe. Des fixations maintiennent le capot de soufflante sur le support avant. Ils restent libres au niveau du bord aval.

Toutefois, une telle solution est utilisée aujourd'hui sur des nacelles de taille sensiblement réduite, et les pièces sont dimensionnées de sorte à utiliser la raideur interne du capot de soufflante pour limiter les déplacements et les contacts non souhaités (grilles et support des capots mobiles). Cette solution n'est pas utilisable pour les nacelles de grande taille.

Un but de l'invention est de réaliser des nacelles de grande taille équipées d'un dispositif inverseur de poussée à grille mobile configuré pour que le capot mobile s'emboîte aisément dans le capot de soufflante lors d'un passage de la position déployée à la position rétractée du dispositif inverseur de poussée.

En vue de la réalisation de ce but, on propose selon l'invention une nacelle de moteur d'aéronef double flux selon la revendication 1.

Par solidaire de la section médiane ou de la section aval, on entend fixé à la section médiane ou la section aval.

Ainsi les différents dispositifs de guidage sont rigidement reliés les uns aux autres par l'élément de la section médiane auquel ils sont raccordés de sorte que la cohésion de l'ensemble de la nacelle se trouve renforcée.

Le premier et le deuxième élément de guidage peuvent être fixés directement à la section médiane et à la section aval respectivement.

Au moins un des dispositifs de guidage entoure au moins en partie au moins un actionneur. Ainsi le guidage est réalisé de façon compacte.

Selon un aspect avantageux de l'invention au moins un des dispositifs de guidage comporte un élément de guidage interposé entre le carter de soufflante et une partie d'au moins un actionneur.

Selon un autre aspect avantageux de l'invention au moins un des dispositifs de guidage comporte un patin de guidage en U porté par le carter de soufflante et une piste en U associée, portée par la section aval.

Selon encore d'autres aspects de l'invention pris séparément ou en combinaison :
- au moins un des dispositifs de guidage comporte une piste de guidage en O associée au patin de guidage en U, et une piste de guidage associée à la piste de guidage en O sur une face de la piste de guidage en O opposée au patin de guidage en U;
- au moins un des dispositifs de guidage est dimentionné pour assurer un verrouillage du capot de soufflante et du capot mobile l'un par rapport à l'autre pour une position rétractée du capot mobile;
- au moins un des dispositifs de guidage est dimentionné pour être déverrouillée après un déplacement dans un sens de déploiement compris entre 1% et 30%, de préférence 20%, de la course du capot mobile;
- au moins un des dispositifs de guidage comporte une piste en T ayant une queue engagée entre deux éléments de grille, et une tête s'étendant en regard d'une piste plane portée par le capot de soufflante ;
- la nacelle comporte au moins un dispositif de deux types distincts choisis dans les types à piste en U, à piste en O, ou à piste en T ;
- la nacelle comporte deux dispositifs de chaque type ;
- la nacelle comprend deux pistes en U s'étendant dans une moitié inférieure de la nacelle, deux pistes en T s'étendant dans un plan médian horizontal, et deux pistes en O s'étendant dans une moitié supérieure de la nacelle ;
- la nacelle comporte au moins un organe de centrage solidaire du capot mobile et s'étendant en regard d'une cavité du capot de soufflante ;
- l'organe de centrage est configuré pour réaliser un verrouillage du capot de soufflante et du capot mobile l'un par rapport à l'autre pour une position rétractée du capot mobile.

D'autres caractéristiques et avantages de l'invention apparaîtront encore à la lecture de la description qui suit d'un mode de réalisation préféré non limitatif de la nacelle selon l'invention, en référence aux figures ci-jointes parmi lesquelles :

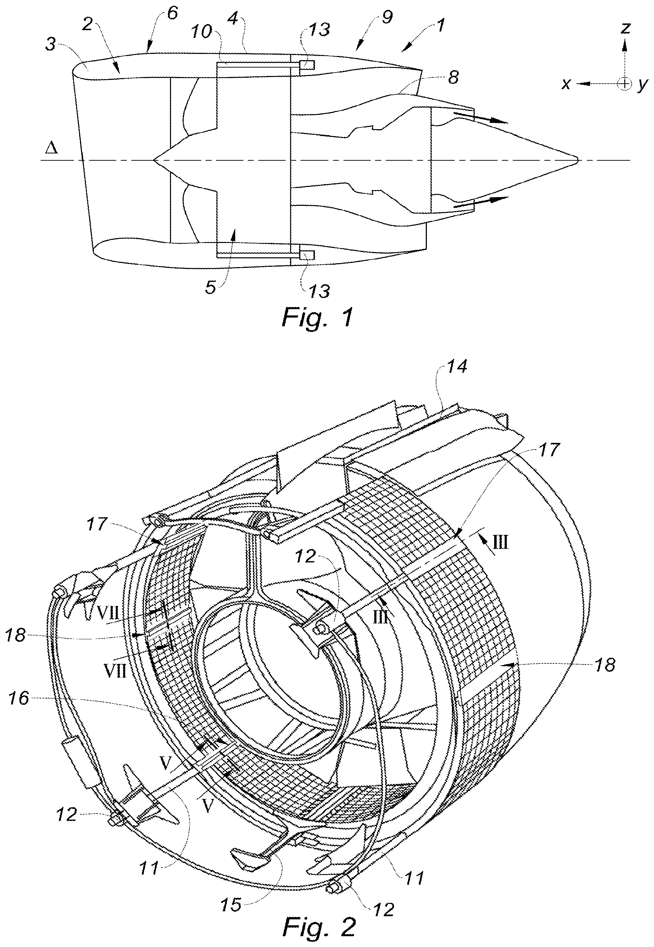

- la figure 1 est une vue très schématique, en coupe par un plan diamétral vertical, d'un ensemble propulsif équipé d'une nacelle selon l'invention,
- la figure 2 est une vue en perspective schématique partielle d'une nacelle selon l'invention en position déployée, c'est-à-dire en position d'inversion de poussée, la partie fixe du capot de soufflante étant retirée,

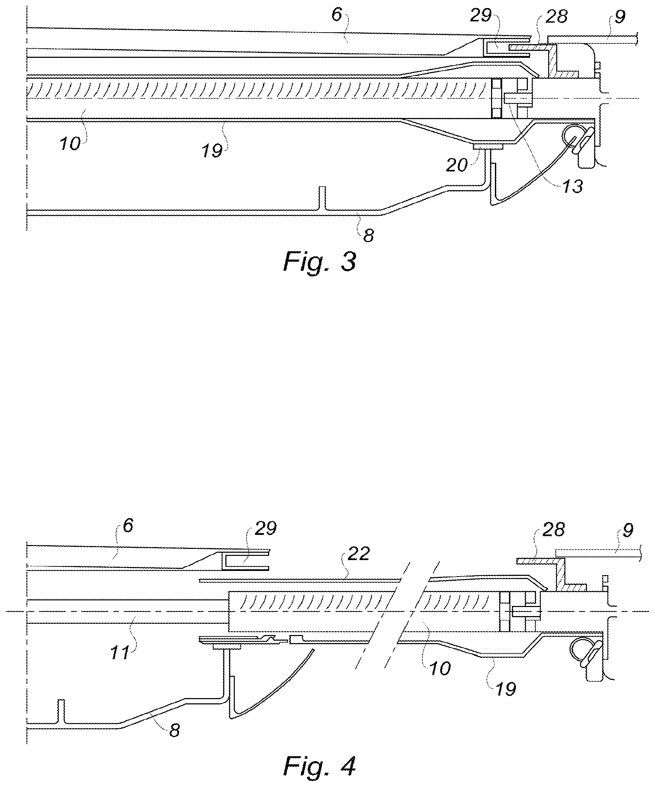

- la figure 3 est une vue partielle très schématique, en coupe selon la ligne III-III de la figure 2, pour une position rétractée de l'inverseur de poussée,
- la figure 4 est une vue analogue à celle de la figure 3 pour une position déployée de l'inverseur de poussée,

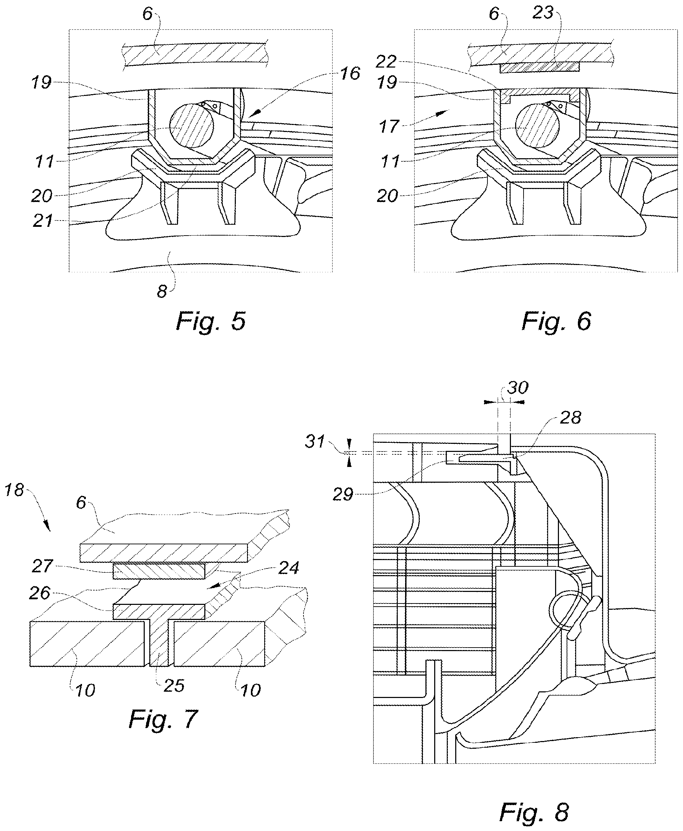

- la figure 5 est une vue en perspective partielle d'une piste en U et du patin en U associé,
- la figure 6 est une vue en perspective partielle d'une piste en O et du patin en U associé,
- la figure 7 est une vue en perspective partielle d'une piste en T et de la piste plane associée,
- la figure 8 est une vue en coupe partielle d'un organe de centrage.

En référence aux figures, la nacelle 1 présente de façon connue en soi une forme sensiblement tubulaire selon un axe longitudinal Δ. La nacelle 1 comprend une section amont 2 avec une lèvre d'entrée d'air 3, une section médiane 4 entourant une soufflante 5 d'un moteur tel qu'un turboréacteur double flux, et une section aval.

En particulier, la section médiane comprend un carter de soufflante 8 entourant la soufflante 5, ledit carter de soufflante supportant un capot de soufflante 6 ledit capot de soufflante étant adapté à être léché extérieurement par le flux d'air extérieur de la nacelle 1 durant le vol.

La section aval comporte au moins un capot mobile 9 comportant des moyens d'inversion de poussée. Les capots mobiles 9 sont liés à des grilles 10 de l'inverseur de poussée et sont entraîné, lors de l'inversion de poussée par des actionneurs, ici quatre vérins électromécaniques, régulièrement répartis autour de l'axe Δ et comportant des tiges 11 ayant une extrémité 13 solidaire de la section aval, et un moteur 12 fixé à la section médiane. Lors des déplacements de la section aval, les efforts sont supportés par un rail 14 en partie haute, en position communément appelée position 12h, et un rail 15 en partie basse, aussi appelée position 6h par comparaison avec un cadran d'une horloge.

Selon l'invention, la nacelle comporte une série de dispositifs de guidage répartis autour de l'axe longitudinal Δ de la nacelle 1. En d'autres termes, les dispositifs de guidages sont répartis circonférentiellement par rapport à la nacelle, et de préférence répartis de façon homogène. De manière générale, ces dispositifs de guidage comprennent au moins un premier élément de guidage solidaire de la section médiane et un deuxième élément de guidage solidaire de la section aval, les premier et deuxième éléments de guidage coopérant l'un avec l'autre pour assurer une liaison de guidage, telle que par exemple une liaison glissière.

Dans le mode de réalisation illustré, la nacelle 1 comprend des dispositifs de guidage 16 présentant un premier élément de guidage 20 formant patin et solidaire du carter de soufflante 8 coopérant avec un deuxième élément de guidage 19, formant piste et solidaire de la structure supportant les grilles, et en particulier des cadres avant et arrière supportant les grilles.

Ces dispositifs de guidage 16 à piste de guidage sensiblement en U sont au nombre de deux et sont associés aux actionneurs inférieurs, c'est-à-dire aux actionneurs s'étendant en dessous d'un plan diamétral horizontal de la nacelle.

Par ailleurs, la nacelle 1 comprend des dispositifs de guidage 17 présentant un premier élément de guidage 23 formant piste et solidaire du capot de soufflante coopérant avec un deuxième élément de guidage 22, formant une piste complémentaire et solidaire du capot mobile de l'inverseur de poussée.

Ces dispositifs de guidage 17 à piste de guidage sensiblement en O sont au nombre de deux et sont associés aux actionneurs supérieurs c'est-à-dire aux actionneurs s'étendant au-dessus d'un plan diamétral horizontal de la nacelle 1.

La nacelle 1 comprend également des dispositifs de guidage 18 présentant un premier élément de guidage 27 formant piste et solidaire du capot de soufflante coopérant avec un deuxième élément de guidage 24, formant patin et solidaire des cadres avant et arrière supportant les grilles.

Ces dispositifs de guidage 18 en T, au nombre de deux, sont intercalés entre des blocs de grille 10 dans un plan diamétral horizontal de la nacelle et situés de chaque côté de la nacelle. Bien entendu cette configuration peut être modifiée en fonction de la configuration de chaque nacelle 1.

Plus précisément, les dispositifs de guidage 16 à piste de guidage en U comprennent chacun une piste de guidage en U 19 qui entoure en partie la tige 11 d'un actionneur radialement sous ladite tige, et dont l'extrémité aval, par référence à une direction d'écoulement des gaz pour une position de jet direct du dispositif inverseur de poussée, est fixée à une chape reliée au moteur 12 de l'actionneur.

Un patin en U 20 est fixé au carter de soufflante 8 et est en contact avec la piste de guidage en U 19. Au voisinage de son extrémité aval le fond 21 de la piste de guidage en U 19 est incurvé de façon à réaliser un verrouillage du capot de soufflante 6 et du capot mobile 9 l'un par rapport à l'autre, par encastrement de la piste de guidage en U 19 entre le patin en U 20 et le capot de soufflante 6, pour une position rétractée du capot mobile.

Les dispositifs de guidage 17 comprennent comme précédemment une piste en U 19, mais celle-ci est complétée par une piste en U inversé 22 encastrée dans la piste en U 19 pour former une piste en O qui s'étend en regard d'une piste plane 23 portée par le capot de soufflante 6. Cette piste en O est plus généralement une piste présentant une section qui présente un contour fermé et qui entoure complètement la tige 11 de l'actionneur, en étant sensiblement concentrique par rapport à elle.

De préférence, les dispositifs de guidages 17 concentriques au moins présentent au moins une zone de transition durant la course du capot mobile entre ses positions jet direct et jet indirect de sorte à ce que, lorsque le capot mobile se déplace vers la position déployée d'inversion de poussée, une libération des jeux s'opère entre les sections médiane et aval.

La zone de transition est située sur une plage d'environ 1 à 30 % de la course dudit capot mobile prise à partir de sa position jet direct, de préférence encore entre 1% et 20%. De préférence encore, cette zone de transition est une zone intermédiaire située entre deux zones fonctionnelles :
- une zone proximale pour engager correctement le capot mobile dans le capot fixe : cette zone se situe au début de la course du capot mobile lors de son ouverture, c'est-à-dire en fin de course lors de sa fermeture. En d'autres termes, elle se situe sur une zone proche de la position fermée de l'inverseur de poussée, i.e. de la position jet direct. Cette zone proximale correspond à une plage d'environ 0 à 2% de la course du capot mobile prise à partir de sa position jet direct, et de préférence de l'ordre de 1%. La course d'un capot mobile entre ses positions jet direct et jet indirect étant de l'ordre de 500 mm, cette zone est réduite à sensiblement quelques millimètres, ceci pour permettre l'engagement correct du capot mobile, notamment des organes de centrage 28 dans des cavités 29 ;
- une zone distale pour éviter les contacts d'une part, entre les grilles et un bord de déviation, et d'autre part, entre les grilles et le capot mobile, le jeu pouvant être assez différents en fonction des dimensions et configurations des nacelles, comme par exemple en fonction de l'épaisseur de ligne de la nacelle ou des positions relatives entre les pièces. Cette zone se situe à la suite de la zone intermédiaire de transition jusqu'à 100% de la course du capot mobile prise à partir de sa position jet direct. Durant cette course, le jeu libéré alors durant la phase de transition est maintenu sensiblement constant tout en permettant d'éviter les contacts précités.

Lors de la course du capot mobile dans la zone proximale, les jeux radiaux entre les pièces sont sensiblement de l'ordre du millimètre, il s'agit d'une zone de la course du capot mobile où le guidage doit être relativement fin pour permettre la fermeture précise du capot mobile sans difficultés tout en permettant le centrage dudit capot mobile. Lorsque la course du capot mobile entre ensuite dans la zone de transition, les jeux sont ainsi libérés, pour atteindre entre 3 et 10 fois la valeur du jeu en position jet direct, de préférence entre 5 et 10 fois cette valeur. Dans cet exemple, les jeux radiaux augmentent ainsi jusqu'à environ 10 mm pour ensuite conserver un jeu similaire jusqu'à la position jet indirect de la zone de transition jusqu'à la fin de course, après avoir parcouru la zone distale.

De préférence, les dispositifs de guidage 17 forment une rampe le long de cette zone de transition qui s'étend sur une longueur comprise entre 1% et 30%, de préférence 20%, de la course du capot mobile prise à partir de sa position jet direct. Cette rampe présente une inclinaison de sorte à ce que, lorsque le capot mobile se déplace vers la position déployée d'inversion de poussée, une libération des jeux s'opère entre les sections médiane et aval. Cette inclinaison présente avantageusement une pente entre 0,5 et 5%, de préférence d'environ 1%.

Les dispositifs de guidage 18 comprennent une piste en T 24 ayant une queue 25 engagée entre deux éléments de grille 10, et une tête 26 s'étendant en regard d'une piste plane 27 portée par le capot de soufflante 6.

Les dispositifs de guidage sont configurés, en particulier du point de vue des jeux entre les différents composants, pour être actifs en position de transit ou en position d'inversion totale de poussée. Pour assurer un centrage des parties de capot de soufflante l'une par rapport à l'autre lorsque l'inverseur de poussée est dans une position de jet direct, la nacelle comporte des organes de centrage 28 fixés à l'extrémité avant de la partie mobile et s'étendant axialement dans des cavités 29 à la périphérie du bord aval du capot de soufflante. Afin de permettre un centrage sans blocage du capot de soufflante et du capot mobile l'un par rapport à l'autre lorsque les actionneurs sont en butée, les organes de centrage sont montés avec un jeu axial 30 et un jeu radial 31 de quelques millimètres.

Bien entendu l'invention n'est pas limitée au mode de réalisation décrit et est susceptible de variantes de réalisation sans sortir du cadre de l'invention telle que définie par les revendications.

En particulier, bien que le dispositif selon l'invention ait été décrit en relation avec un mode de réalisation selon lequel les dispositifs de guidage entourent les actionneurs, l'invention concerne une nacelle équipée de dispositifs de guidage quelle que soit l'implantation de ces dispositifs, sous réserve que au moins un des dispositifs de guidage entoure au moins en partie au moins un actionneur.

Bien que l'invention ait été décrite en relation avec une nacelle comportant des dispositifs de guidage de différents types, l'invention peut être réalisée avec des dispositifs de guidage d'un seul type.

## Revendications

1. Nacelle pour un moteur d'aéronef double flux, la nacelle comprenant une entrée d'air (2) configurée pour être disposée en amont du moteur, une section médiane (4) destinée à entourer une soufflante (5) du moteur, la section médiane étant délimitée extérieurement par un capot de soufflante (6) configuré pour être supporté par un carter de soufflante (8) auquel il est configuré pour être fixé en partie amont, une section aval délimitant une veine annulaire adaptée pour faire circuler le flux d'air et abritant des moyens d'inversion de poussée, les moyens d'inversion de poussée comprenant des grilles et un capot mobile (9) associé à au moins un actionneur pour déplacer le capot mobile entre une position de jet direct, dans laquelle il assure la continuité aérodynamique de la nacelle et une position de jet indirect dans laquelle il ouvre un passage dans la nacelle en dégageant les grilles disposées autour de cette veine qui reçoivent le flux d'air froid pour le renvoyer vers l'extérieur et vers l'avant, les grilles étant fixées au capot mobile et coulissant avec lui, où la nacelle comporte une série de dispositifs guidage (16, 17, 18) répartis autour d'un axe longitudinal (Δ) de la nacelle, et comportant chacun un premier élément de guidage (20, 23, 27) solidaire de la section médiane et un deuxième élément de guidage (19, 22, 24) solidaire de la section aval, **caractérisée en ce qu'**au moins un des dispositifs de guidage (16, 17) entoure au moins en partie au moins un actionneur (11).

2. Nacelle selon la revendication 1 **caractérisée en ce qu'**au moins un des dispositifs de guidage (16, 17) comporte un élément de guidage interposé entre le carter de soufflante (8) et une partie (13) dudit au moins un actionneur.

3. Nacelle selon la revendication 1 **caractérisée en ce qu'**au moins un des dispositifs de guidage comporte un patin de guidage en U (20) porté par le carter de soufflante et une piste en U (19) associée, portée par la section aval.

4. Nacelle selon la revendication 3 **caractérisée en ce qu'**au moins un des dispositifs de guidage comporte une piste de guidage en O (19, 22) associée au patin de guidage en U, et une piste de guidage (23) associée à la piste de guidage en O sur une face de la piste de guidage en O opposée au patin de guidage en U.

5. Nacelle selon l'une des revendications 1 à 4 **caractérisée en ce qu'**au moins un des dispositifs de guidage est dimentionné pour assurer un verrouillage du capot de soufflante (6) et du capot mobile (9) l'un par rapport à l'autre pour une position rétractée du capot mobile.

6. Nacelle selon la revendication 5 **caractérisée en ce qu'**au moins un des dispositifsde guidage est dimentionné pour être déverrouillé après un déplacement dans un sens de déploiement compris entre 1% et 30%, de préférence 20%, de la course du capot mobile.

7. Nacelle selon la revendication 1 **caractérisée en ce qu'**au moins un des dispositifs de guidage comporte une piste en T (24) ayant une queue (25) engagée entre deux éléments de grille (10), et une tête (26) s'étendant en regard d'une piste plane (27) portée par le capot de soufflante (6).

8. Nacelle selon les revendications 3 à 7 **caractérisée en ce qu'**elle comporte au moins un dispositif de guidage de deux types distints choisis dans les types à piste en U, à piste en O, ou à piste en T.

9. Nacelle selon la revendication 8 **caractérisée en ce qu'**elle comprend deux dispositifs de chaque type.

10. Nacelle selon la revendication 9, **caractérisée en ce qu'**elle comprend deux pistes en U s'étendant dans une moitié inférieure de la nacelle, deux pistes en T s'étendant dans un plan médian horizontal, et deux pistes en O s'étendant dans une moitié supérieure de la nacelle.

11. Nacelle selon l'une quelconque des revendications 1 à 10, **caractérisée en ce qu'**elle comporte au moins un organe de centrage (28) solidaire du capot mobile (9) et s'étendant en regard d'une cavité (29) du capot de soufflante (6).

12. Nacelle selon la revendication 11 **caractérisée en ce que** l'organe de centrage (28) est configuré pour réaliser un verrouillage du capot de soufflante et du capot mobile l'un par rapport à l'autre pour une position rétractée du capot mobile.

## Patentansprüche

1. Flugzeugtriebwerksgondel für ein Zweikreis-Flugzeugtriebwerk, wobei die Gondel einen Lufteinlass (2) umfasst, der so konfiguriert ist, dass er stromaufwärts des Triebwerks angeordnet ist, sowie einen mittleren Abschnitt (4), der dazu bestimmt ist, ein Gebläse (5) des Triebwerks zu umschließen, wobei der mittlere Abschnitt außen durch eine Gebläsehaube (6) begrenzt ist, die so konfiguriert ist, dass sie von einem Gebläsegehäuse (8) getragen wird, an dem sie stromaufwärts befestigt ist, einen stromabwärts gelegenen Abschnitt, der einen ringförmigen Strom begrenzt, der geeignet ist, den Luftstrom zirkulieren zu lassen, und der Mittel zur Schubumkehr beherbergt, die Mittel zur Schubumkehr umfassen Gitter und eine bewegliche Haube (9), die mit mindestens einem Stellglied verbunden ist, um die bewegliche Haube zwischen einer direkten Strahlposition, in der sie die aerodynamische Kontinuität der Gondel gewährleistet, und einer indirekten Strahlposition zu verschieben, in der sie einen Durchgang in der Gondel öffnet, wobei sie die um diesen Strom herum angeordneten Gitter freigibt, die den Kaltluftstrom aufnehmen, um ihn nach außen und nach vorne zu leiten, wobei die Gitter an der beweglichen Haube befestigt sind und mit dieser verschiebbar sind, wobei die Gondel eine Reihe von Führungsvorrichtungen (16, 17, 18) umfasst, die um eine Längsachse (Δ) der Gondel verteilt sind, und jeweils ein erstes Führungselement (20, 23, 27), das fest mit dem mittleren Abschnitt verbunden ist, und ein zweites Führungselement (19, 22, 24), das fest mit dem hinteren Abschnitt verbunden ist, umfasst, **dadurch gekennzeichnet, dass** mindestens eine der Führungsvorrichtungen (16, 17) mindestens einen Aktuator (11) zumindest teilweise umgibt.

2. Gondel nach Anspruch 1, **dadurch gekennzeichnet, dass** mindestens eine der Führungsvorrichtungen (16, 17) ein Führungselement umfasst, das zwischen dem Gebläsegehäuse (8) und einem Teil (13) des mindestens einen Aktuators angeordnet ist.

3. Gondel nach Anspruch 1, **dadurch gekennzeichnet, dass** mindestens eine der Führungsvorrichtungen einen U-förmigen Führungsschuh (20), der von dem Gebläsegehäuse getragen wird, und eine dazugehörige U-förmige Bahn (19), die von dem stromabwärts führenden Abschnitt getragen wird, umfasst.

4. Gondel nach Anspruch 3, **dadurch gekennzeichnet, dass** mindestens eine der Führungsvorrichtungen eine O-förmige Führungsbahn (19, 22), die dem U-förmigen Führungsschuh zugeordnet ist, und eine Führungsbahn (23), die der O-förmigen Führungsbahn auf einer Seite der O-förmigen Führungsbahn, die dem U-förmigen Führungsschuh gegenüberliegt, zugeordnet ist, umfasst.

5. Gondel nach einem der Ansprüche 1 bis 4, **dadurch gekennzeichnet, dass** mindestens eine der Führungsvorrichtungen so dimensioniert ist, dass sie eine Verriegelung der Gebläsehaube (6) und der beweglichen Haube (9) relativ zueinander für eine eingefahrene Position der beweglichen Haube gewährleistet.

6. Gondel nach Anspruch 5, **dadurch gekennzeichnet, dass** mindestens eine der Führungsvorrichtungen so bemessen ist, dass sie nach einer Bewegung in einer Ausfahrrichtung zwischen 1 % und 30 %, vorzugsweise 20 %, des Weges der beweglichen Haube entriegelt wird.

7. Gondel nach Anspruch 1, **dadurch gekennzeichnet, dass** mindestens eine der Führungsvorrichtungen eine T-förmige Bahn (24) mit einem Schaft (25), der zwischen zwei Gitterelementen (10) in Eingriff steht, und einem Kopf (26) umfasst, der sich gegenüber einer ebenen Bahn (27) erstreckt, die von der Gebläsehaube (6) getragen wird.

8. Gondel nach Anspruch 3 bis 7, **dadurch gekennzeichnet, dass** sie mindestens eine Führungsvorrichtung von zwei verschiedenen Typen umfasst, die aus den Typen mit U-förmiger Bahn, mit O-förmiger Bahn oder mit T-förmiger Bahn ausgewählt sind.

9. Gondel nach Anspruch 8, **dadurch gekennzeichnet, dass** sie zwei Vorrichtungen von jedem Typ umfasst.

10. Gondel nach Anspruch 9, **dadurch gekennzeichnet, dass** sie zwei U-förmige Bahnen, die sich in einer unteren Hälfte der Gondel erstrecken, zwei T-förmige Bahnen, die sich in einer horizontalen mittleren Ebene erstrecken, und zwei O-förmige Bahnen, die sich in einer oberen Hälfte der Gondel erstrecken, umfasst.

11. Gondel nach einem der Ansprüche 1 bis 10, **dadurch gekennzeichnet, dass** sie mindestens ein Zentrierglied (28) umfasst, das fest mit der beweglichen Haube (9) verbunden ist und sich gegenüber einem Hohlraum (29) der Gebläsehaube (6) erstreckt.

12. Gondel nach Anspruch 11, **dadurch gekennzeichnet, dass** das Zentrierglied (28) so konfiguriert ist, dass es eine Verriegelung der Gebläsehaube und der beweglichen Haube relativ zueinander für eine eingefahrene Position der beweglichen Haube bewirkt.

## Claims

1. A nacelle for a bypass aircraft engine, the nacelle comprising an air inlet (2) configured to be disposed upstream of the engine, a middle section (4) intended to surround a fan (5) of the engine, the middle section being delimited externally by a fan cowl (6) configured to be supported by a fan casing (8) to which it is configured to be fastened in the upstream portion, a downstream section delimiting an annular flow path adapted to circulate the air flow and accommodating thrust reversal means, the thrust reversal means comprising cascades and a movable cowl (9) associated to at least one actuator to displace the movable cowl between a direct jet position, in which it ensures the aerodynamic continuity of the nacelle and an indirect jet position in which it opens a passage in the nacelle by uncovering the cascades disposed around this flow path which receive the cold air flow to return it outwards and forwards, the cascades being fastened to the movable cowl and sliding with it, wherein the nacelle includes a series of guiding devices (16, 17, 18) distributed about a longitudinal axis (Δ) of the nacelle, and each including a first guiding element (20, 23, 27) secured to the middle section and a second guiding element (19, 22, 24) secured to the downstream section, **characterized in that** at least one of the guiding devices (16, 17) at least partially surrounds at least one actuator (11).

2. The nacelle according to claim 1, **characterized in that** at least one of the guiding devices (16, 17) includes a guiding element interposed between the fan casing (8) and a portion (13) of said at least one actuator.

3. The nacelle according to claim 1, **characterized in that** at least one of the guiding devices includes a U-shaped guiding shoe (20) carried by the fan casing and an associated U-shaped track (19), carried by the downstream section.

4. The nacelle according to claim 3, **characterized in that** at least one of the guiding devices includes an O-shaped guiding track (19, 22) associated to the U-shaped guiding shoe, and a guiding track (23) associated to the O-shaped guiding track on a face of the O-shaped guiding track opposite to the U-shaped guiding shoe.

5. The nacelle according to any of claims 1 to 4, **characterized in that** at least one of the guiding devices is dimensioned to ensure a locking of the fan cowl (6) and the movable cowl (9) relative to each other in a retracted position of the movable cowl.

6. The nacelle according to claim 5, **characterized in that** at least one of the guiding devices is dimensioned to be unlocked after a displacement in a direction of deployment comprised between 1% and 30%, preferably 20%, of the stroke of the movable cowl.

7. The nacelle according to claim 1, **characterized in that** at least one of the guiding devices includes a T-shaped track (24) having a tail (25) engaged between two cascade elements (10), and a head (26) extending opposite a flat track (27) carried by the fan cowl (6).

8. The nacelle according to claims 3 to 7, **characterized in that** it includes at least one guiding device of two distinct types selected from the types with U-shaped track, O-shaped track, or T-shaped track.

9. The nacelle according to claim 8, **characterized in that** it comprises two devices of each type.

10. The nacelle according to claim 9, **characterized in that** it comprises two U-shaped tracks extending in a lower half of the nacelle, two T-shaped tracks extending in a horizontal median plane, and two O-shaped tracks extending in an upper half of the nacelle.

11. The nacelle according to any one of claims 1 to 10, **characterized in that** it includes at least one centering member (28) secured to the movable cowl (9) and extending opposite a cavity (29) of the fan cowl (6).

12. The nacelle according to claim 11, **characterized in that** the centering member (28) is configured to carry out a locking of the fan cowl and the movable cowl relative to each other in a retracted position of the movable cowl.
